Europäisches Patentamt

European Patent Office

Office européen des brevets

(11) Veröffentlichungsnummer : **0 022 986**
**B1**

# (12) EUROPÄISCHE PATENTSCHRIFT

(45) Veröffentlichungstag der Patentschrift :
**11.05.83**

(51) Int. Cl.³ : **H 04 L   9/00,** H 04 L   5/16,
    H 04 L   7/04

(21) Anmeldenummer : **80103938.9**

(22) Anmeldetag : **09.07.80**

(54) **Verfahren zur verschlüsselten Datenübertragung im Halbduplexbetrieb zwischen Datenendeinrichtungen zweier Datenstationen.**

(30) Priorität : **19.07.79 DE 2929252**

(43) Veröffentlichungstag der Anmeldung :
**28.01.81 Patentblatt 81/04**

(45) Bekanntmachung des Hinweises auf die Patenterteilung : **11.05.83 Patentblatt 83/19**

(84) Benannte Vertragsstaaten :
**BE GB NL**

(56) Entgegenhaltungen :
**DE B 1 462 983**
**DE B 2 557 214**
**DE C 978 007**

(73) Patentinhaber : **SIEMENS AKTIENGESELLSCHAFT**
**Berlin und München Wittelsbacherplatz 2**
**D-8000 München 2 (DE)**

(72) Erfinder : **Bergmann, Eduard, Ing.grad.**
**Altena Strasse 1**
**D-5880 Lüdenscheid (DE)**

## Verfahren zur verschlüsselten Datenübertragung im Halbduplexbetrieb zwischen Datenendeinrichtungen zweier Datenstationen

Die Erfindung bezieht sich auf ein Verfahren zur verschlüsselten Datenübertragung im Halbduplexbetrieb zwischen Datenendeinrichtungen zweier Datenstationen, wobei eine Schlüsseleinrichtung der einen Datenstation ein Einphasprogramm an die Schlüsseleinrichtung der anderen Datenstation sendet und diese andere Schlüsseleinrichtung eine Quittung abgibt.

Wenn Daten und eine Endekennung im Halbduplexbetrieb übertragen werden, dann kann im Anschluß daran ein Richtungswechsel erfolgen, um Daten in der Gegenrichtung übertragen zu können. Derartige Richtungswechsel werden mit Richtungswechselprogrammen eingeleitet, die aus je einer Phaskennung, je einer ersten Sendekennung und je einer zweiten Sendekennung bestehen. Diese Richtungswechselprogramme werden von der Gegenstelle quittiert. Dabei werden die Cryptoeinheiten jeweils nach dem Erkennen der Endekennung ausgephast und nach dem letzten Bit der ersten Sendekennung neu eingephast. Ein derartiges Verfahren ist beispielsweise aus der DE-B-2 557 214 bekannt. Dieses Verfahren hat den Nachteil, daß der Wirkungsgrad der Datenübertragung durch die zu übertragenden Richtungswechselprogramme mit je 120 Bit herabgesetzt wird.

Um die Datenübertragungsrate zu erhöhen, wäre es grundsätzlich denkbar, die Daten im Vollduplexbetrieb zu übertragen. Dazu ist aber ein relativ großer technischer Aufwand erforderlich.

Der Erfindung liegt die Aufgabe zugrunde, ein Verfahren zur verschlüsselten Datenübertragung anzugeben, das einerseits einen geringeren technischen Aufwand erfordert als Vollduplexdatenübertragungsverfahren und dessen Verlustzeiten bei der Einphasung relativ gering sind.

Die der Erfindung zugrundeliegende Aufgabe wird durch die folgenden Verfahrensschritte gelöst :

A. Die Schlüsseleinrichtungen der beiden Datenstationen verkehren über die entsprechenden Datenübertragungseinrichtungen, die einen Vollduplexbetrieb ermöglichen.

B. Nach Einphasung der Cryptoeinheiten beider Datenstationen werden in einer Richtung Richtungswechselprogramme, Daten und Endekennungen übertragen, und in der Gegenrichtung werden gleichzeitig jeweils Synchronisiersignale übertragen.

Im Vergleich zum Vollduplexdatenübertragungsverfahren zeichnet sich die Erfindung dadurch aus, daß der erforderliche technische Aufwand relativ gering ist, weil die Cryptoeinheiten nur für Halbduplexbetrieb ausgelegt sein müssen. Im Vergleich zu üblichen Halbduplexdatenübertragungsverfahren zeichnet sich das erfindungsgemäße Verfahren dadurch aus, daß die durch die Richtungswechselprogramme bedingten Verlustzeiten gering sind, weil diese Richtungswechselprogramme keine Phaskennung enthalten. Beispielsweise können die Richtungswechselprogramme nur aus der ersten Sendekennung bestehen, so daß jeweils nur 40 Bit erforderlich sind.

Um eine sichere und rationelle Synchronisierung zu gewährleisten, ist es zweckmäßig, daß das Synchronisiersignal abwechselnd aus je zwei Binärwerten erster Art bzw. aus je zwei Binärwerten zweiter Art besteht.

Im folgenden werden Ausführungsbeispiele der Erfindung anhand der Figuren 1 bis 4 beschrieben, wobei in mehreren Figuren dargestellte gleiche Gegenstände mit gleichen Bezugszeichen bezeichnet sind. Es zeigen :

Figur 1 eine schematische Darstellung eines üblichen Halbduplexdatenübertragungssystems,

Figur 2 einige Diagramme anhand deren der zeitliche Ablauf des Verfahrens gemäß Fig. 1 erkennbar ist,

Figur 3 eine schematische Darstellung eines Verfahrens, mit Hilfe dessen verkürzte Richtungswechsel durchführbar sind und

Figur 4 einige Diagramme, welche den zeitlichen Ablauf des in Fig. 3 dargestellten Systems erkennen lassen.

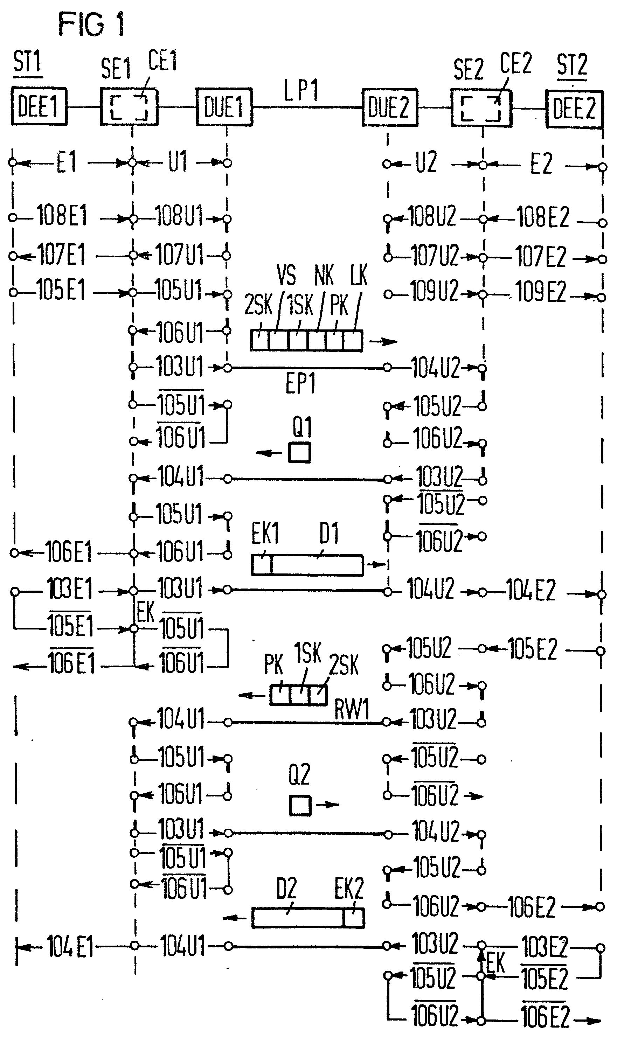

Fig. 1 zeigt schematisch die Datenübertragung von einer ersten Station ST1 zu einer zweiten Station ST2 im Halbduplexbetrieb. Im Bereich der ersten Station befinden sich die Datenendeinrichtungen DEE1, die Schlüsseleinrichtung SE1 mit der Cryptoeinheit CE1 und die Datenübertragungseinrichtung DUE1. Im Bereich der zweiten Station befinden sich die Datenendeinrichtung DEE2, die Schlüsseleinrichtung SE2 mit der Cryptoeinheit CE2 und die Datenübertragungseinrichtung DUE2. Die beiden Stationen sind über die Übertragungsstrecke miteinander verbunden. Es kann sich beispielsweise um das Leitungspaar LP1 einer Zwei-Drahtübertragungsstrecke handeln. Das Bezugszeichen E1 bzw. E2 bezieht sich auf den Bereich zwischen der Datenendeinrichtung DEE1 bzw. DEE2 und der Schlüsseleinrichtung SE1 bzw. SE2. Das Bezugszeichen U1 bzw. U2 bezieht sich auf den Bereich zwischen der Schlüsseleinrichtung SE1 bzw. SE2 und der Datenübertragungseinrichtung DUE1 bzw. DUE2.

Es wird zunächst die Herstellung der Betriebsbereitschaft der Datenendeinrichtung DEE1, der Schlüsseleinrichtung SE1 und der Übertragungseinrichtung DUE1 beschrieben. Dazu gibt die Datenendeinrichtung DEE1 ein Signal über die Leitung 108E1 an die Schlüsseleinrichtung SE1, von der dieses Signal über die Leitung 108U1 an die Datenübertragungseinrichtung DUE1 weitergegeben wird. Über die Leitung 107U1 meldet die Datenübertragungseinrichtung DUE1 ihre Betriebsbereitschaft an die Schlüsseleinrichtung SE1. Die Schlüsseleinrichtung SE1 meldet diese über die Leitung 107E1 an die Datenendeinrichtung DEE1.

Wenn die Datenendeinrichtung DEE1 Daten senden will, dann gibt sie über die Leitung 105E1 ein Signal an die Schlüsseleinrichtung SE1 ab, das über die Leitung 105U1 an die Datenübertragungseinrichtung DUE1 weitergegeben wird, und das die Anschaltung des Sendeteils der Datenübertragungseinrichtung DUE1 veranlaßt. Die Sendebereitschaft der Datenübertragungseinrichtung DUE1 wird mit einem Signal über die Leitung 106U1 an die Schlüsseleinrichtung SE1 gemeldet.

Über die Leitung 103U1 wird von der Schlüsseleinrichtung SE1 ein Einphasprogramm EP1 ausgegeben, bestehend aus der Löschkennung LK, der Phaskennung PK, der « Nichtkonferenz »-Kennung NK, der ersten Sendekennung 1SK, aus dem variablen Schlüssel VS und aus der zweiten Sendekennung 2SK.

Die empfangende Schlüsseleinrichtung SE2 erhält über eine Leitung 109U2 ein Signal, das den Empfangspegel signalisiert. Die Schlüsseleinrichtung SE2 wird dadurch auf Empfang geschaltet und signalisiert mit einem Signal über die Leitung 109E2 ihre Empfangsbereitschaft an die Datenendeinrichtung DEE2. Anschließend empfängt die Schlüsseleinrichtung SE2 über die Leitung 104U2 das Einphasprogramm. Nach dem Senden bzw. Empfangen der ersten Sendekennung 1SK werden beide Cryptoeinheiten CE1 bzw. CE2 mit dem letzten Zeichen der ersten Sendekennung 1SK definiert gestartet. Danach wird von der sendenden Schlüsseleinrichtung SE1 die Leitung 105U1 abgeschaltet und vor der Datenübertragungseinrichtung DUE1 wird die Leitung 106U1 abgeschaltet. Die Abschaltung der Leitungen ist in der Fig. 1 mit einem Querstrich dargestellt.

Nach erfolgter Einphasung wird von der empfangenden Schlüsseleinrichtung SE2 über die Leitung 105U2 ein Signal an die Datenübertragungseinrichtung DUE2 abgegeben und damit wird der Sendeteil der Datenübertragungseinrichtung DUE2 eingeschaltet. Mit einem Signal über die Leitung 106U2 meldet die Datenübertragungseinrichtung DUE2 ihre Sendebereitschaft. Daraufhin wird über die Leitung 103U2 von der Schlüsseleinrichtung SE2 über die Leitung 103U2 die Quittung Q1 zur Datenübertragungseinrichtung DUE1 übertragen. Von dort aus wird die Quittung über die Leitung 104U1 der Schlüsseleinrichtung SE1 zugeleitet.

Ist die Quittung bei der Schlüsseleinrichtung SE1 eingetroffen, dann schaltet diese mit einem Signal auf der Leitung 105U1 den Sendeteil der Datenübertragungseinrichtung DUE1 wieder ein und erwartet ein Signal auf der Leitung 106U1, das die Sendebereitschaft signalisiert. Anschließend wird die Sendebereitschaft über die Leitung 106E1 der Datenendeinrichtung DEE1 gemeldet.

Die Datenendeinrichtung DEE1 gibt über die Leitung 103E1 Daten an die Schlüsseleinrichtung SE1 ab, wo sie mit Hilfe der Cryptoeinheit CE1 verschlüsselt werden. Die verschlüsselten Daten D1 werden dann über die Leitung 103U1 und über die Datenübertragungseinrichtung DUE1 zur empfangenden Datenübertragungseinrichtung DUE2 gesendet.

Die empfangende Schlüsseleinrichtung SE2 signalisiert mit einem Signal über die Leitung 109E2 ihre Empfangsbereitschaft an die Datenendeinrichtung DEE2 und erhält über die Leitung 104U2 die gesendeten und über die Datenübertragungseinrichtung DUE2 empfangenen Daten. In der Cryptoeinheit CE2 der Schlüsseleinrichtung SE2 werden die auf der Leitung 104U2 empfangenen Daten D1 entschlüsselt und die entschlüsselten Daten werden über die Leitung 104E2 der Datenendeinrichtung DEE2 zugeleitet.

Das Ende der von der Datenendeinrichtung DEE1 gesendeten Daten wird durch ein Signal über die Leitung 105E1 der Schlüsseleinrichtung SE1 gemeldet. Diese Schlüsseleinrichtung SE1 gibt die Endekennung EK1 ab, die über die Leitung 103U1, über die beiden Datenübertragungseinheiten DUE1, DUE2 zur Schlüsseleinrichtung SE2 übertragen wird. Die Schlüsseleinrichtung SE1 wird mit dem letzten Bit der Endekennung EK1 definiert angehalten. Über die Leitung 105U1 wird der Sendeteil der Datenübertragungseinrichtung DUE1 abgeschaltet. Über die Leitung 106E1 wird die Sendebereitschaft der Datenendeinrichtung DEE1 abgeschaltet. Danach wird auch die Sendebereitschaft der Datenübertragungseinrichtung DUE1 abgeschaltet und mit einem Signal über die Leitung 106U1 wird die Abschaltung quittiert; die sendende Schlüsseleinrichtung SE1 geht in ihre Ruhestellung.

Die empfangende Schlüsseleinrichtung SE2 geht nach Erkennung der Endekennung EK1 ebenfalls in ihre Ruhestellung, in der die Cryptoeinheit CE2 mit dem letzten Zeichen der Endekennung EK1 definiert angehalten wird. Damit ist die empfangende Schlüsseleinrichtung SE2 bereit für einen Richtungswechsel.

Wenn die Dateneinrichtung DEE2 über die Leitung 105E2 ein Signal abgibt, dann bedeutet dies, daß ein Richtungswechsel erfolgen soll, weil die Datenendeinrichtung DEE2 nun senden will. Es findet also eine Umschaltung von Empfang auf Sendung statt. Die Schlüsseleinrichtung SE2 gibt nun über die Leitung 105U2 ein Signal an die Datenübertragungseinrichtung DUE2 ab, das die Einschaltung des Sendeteils veranlaßt. Über die Leitung 106U2 erwartet die Schlüsseleinrichtung SE2 eine Rückmeldung hinsichtlich der Sendebereitschaft der Datenübertragungseinrichtung DUE2. Nach Empfang dieser Rückmeldung sendet die Schlüsseleinrichtung SE2 ein Richtungswechsel-Programm RW über die Leitung 103U2.

Das Richtungswechsel-Programm RW besteht aus der Phaskennung PK, aus der ersten Sendekennung 1SK und aus der zweiten Sendekennung 2SK. Nach dem Senden bzw. Empfangen der ersten Sendekennung 1SK werden beide Cryptoeinheiten CE2 bzw. CE1 mit dem letzten Zeichen der ersten Sendekennung 1SK wieder definiert gestartet.

Die Schlüsseleinrichtung SE1 quittiert das Richtungswechsel-Programm RW mit einer Quittung Q2. Dazu werden über die Leitungen 105U1, 106U1, 103U1, Signale und die Quittung Q abgegeben. Diese Signale entsprechen wie beschrieben, den von der Schlüsseleinrichtung SE2 über die Leitungen 105U2, 106U2, 103U2 abgegebenen Signalen.

Nachdem die Schlüsseleinrichtung SE2 die Quittung Q empfangen hat, werden mit Signalen über die Leitungen 105U2, 106U2 und 106E2 Signale abgegeben, die eine ähnliche Funktion wie die vorher beschriebenen, über die Leitungen 104U1, 105U1 und 106E1 abgegebenen Signale haben, und die schließlich die Abgabe der Daten von der Datenendeinrichtung DEE2 auslösen. Die Übertragung der Daten D2 von der Datenendeinrichtung DEE2 über die Leitungen 103E2, 103U2, geschieht in ähnlicher Weise wie die bereits beschriebene Übertragung der Daten von der Endeinrichtung DEE1 über die Leitungen 103E1 und 103U1.

Mit den Quittungen Q wird nur das Erkennen des Einphas- oder Richtungswechselprogramms quittiert. Somit wird der Synchronlauf der Cryptoeinrichtungen quittiert. Die Quittung gibt aber keine Auskunft über das ordnungsgemäße Ver- und Entschlüsseln der zu übertragenden Daten. Falls die Schlüsselphase beispielsweise verlorengeht zwischen Sender und Empfänger während der Datenübertragung, so ist dies nur durch die empfangende Datenendeinrichtung feststellbar.

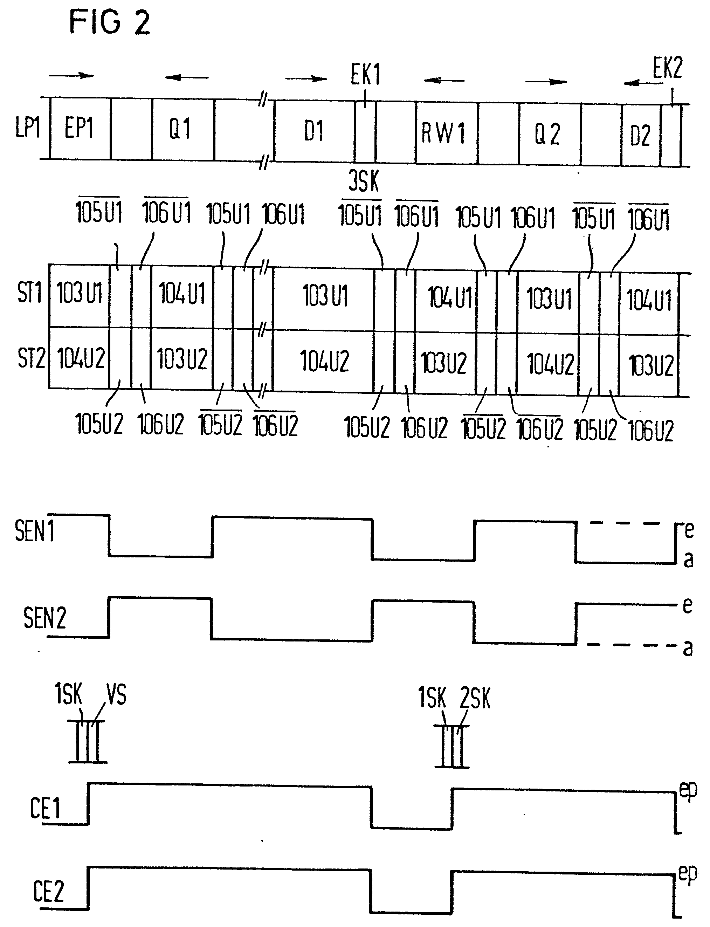

Fig. 2 zeigt ein Schema, aus dem der zeitliche Ablauf der einzelnen Signale und die entsprechenden Leitungsbelegungen ersichtlich sind. Wie bereits anhand der Fig. 1 beschrieben wurde, handelt es sich um einen Halbduplexbetrieb, wobei über das einzige Leitungspaar LP1 Daten abwechselnd in beiden Richtungen übertragen werden. Die oberste Zeile in Fig. 1 bezieht sich auf diese Datenübertragung. Beispielsweise ist ersichtlich, daß zunächst das Einphasprogramm EP1 in der einen Richtung, dann die Quittung Q1 in der Gegenrichtung übertragen wird.

Aus der zweiten und dritten Zeile ist die Leitungsbelegung der Stationen ST1 und ST2 ersichtlich. Das Einphasprogramm EP1 wird also im Bereich der ersten Station ST1 über die Leitung 103U1 und im Bereich der zweiten Station ST2 über die Leitung 104U2 übertragen. Anschließend werden im Bereich der ersten Station ST1 die beiden Leitungen 105U1 und 106U1 abgeschaltet und im Bereich der zweiten Station ST2 werden Signale über die Leitungen 105U2 und 106U2 übertragen. Danach folgt die Quittung Q1 im Bereich der zweiten Station ST2 auf der Leitung 103U2 und im Bereich der ersten Station ST1 auf der Leitung 104U1. Danach werden Signale über die Leitungen 105U1 und 106U1 übertragen und die Leitungen 105U2 und 106U2 werden abgeschaltet.

Die Daten D1 und die Endekennung EK1 werden im Bereich der ersten Station ST1 über die Leitung 103U1 und im Bereich der zweiten Station ST2 über die Leitung 104U2 übertragen.

Danach werden die Leitungen 105U1 und 106U1 abgeschaltet und Signale über die Leitungen 105U2 und 106U2 übertragen. In der Gegenrichtung folgt das Richtungswechselprogramm RW1, das mit der Quittung Q2 quittiert wird. Schließlich werden die Daten D2 von der zweiten Station ST2 zur ersten Station ST1 übertragen.

Die Einschaltung bzw. Ausschaltung der Sendeeinrichtung SEN1 der Datenübertragungseinrichtung DUE1 und der Sendeeinrichtung SEN2 der Datenübertragungseinrichtung DUE2 wird durch die Bezugszeichen e bzw. a anhand der Diagramme dargestellt. Beispielsweise ist ersichtlich, daß die Sendeeinrichtung SEN1 der Datenübertragungseinrichtung DUE1 am Ende des Einphasprogramms EP1 abgeschaltet und am Ende der Quittung Q1 wieder eingeschaltet wird. Die Ein- bzw. Ausschaltung der Sendeeinrichtung SEN2 erfolgt gegenphasig.

Die untersten Diagramme in Fig. 2 stellen die Einphasung der Cryptoeinheiten CE1 und CE2 dar. Die Diagramme zeigen, daß beide Cryptoeinheiten entweder beide eingephast er oder beide nicht eingephast sind. Mit dem Ende der ersten Schlüsselkennung 1SK sind beide Cryptoeinheiten eingephast und bleiben eingephast bis zum Ende der Endekennung EK1. Wie die Fig. 1 deutlicher zeigt, besteht das Richtungswechselprogramm RW1 aus der Phaskennung PK, aus der ersten Schlüsselkennung 1SK und aus der zweiten Schlüsselkennung 2SK. Bei Übertragung des Richtungswechselprogramms RW1 sind die beiden Cryptoeinheiten CE1 und CE2 am Ende der ersten Schlüsselkennung 1SK eingephast und bleiben eingephast bis zum Ende der Endekennung EK2.

Bei dem anhand der Fig. 1 und 2 beschriebenen Halbduplexdatenübertragungsverfahren sind zur Durchführung des Richtungswechsels RW1 insgesamt 120 Bit erforderlich. Bei jedem Richtungswechsel wird also das Leitungspaar LP1 relativ lange zur Übertragung der Richtungswechselprogramme blockiert. Um die zu übertragenden Nutzinformationen pro Zeiteinheit zu erhöhen, wäre es grundsätzlich denkbar, anstelle eines Halbduplexübertragungssystems ein Vollduplexübertragungssystem vorzusehen ; damit können bekanntlich die Nachrichten gleichzeitig in beiden Richtungen übertragen werden. Ein derartiges Vollduplexübertragungssystem erfordert aber einen relativ großen technischen Aufwand. Der vorliegenden Erfindung liegt die Erkenntnis zugrunde, daß der größte Aufwand eines derartigen Vollduplexübertragungssystems für die Cryptoeinheiten CE1 und CE2 erforderlich ist. Unter diesen Voraussetzungen erscheint es zweckmäßig, die Datenendeinrichtungen DEE1, DEE2 und die Cryptoeinheiten CE1, CE2 für Halbduplex und die Schlüsseleinrichtungen SE1, SE2, die Datenübertragungseinrichtungen DUE1, DUE2 und die beiden Leitungspaare LP1, LP2 für Vollduplexbetrieb auszulegen.

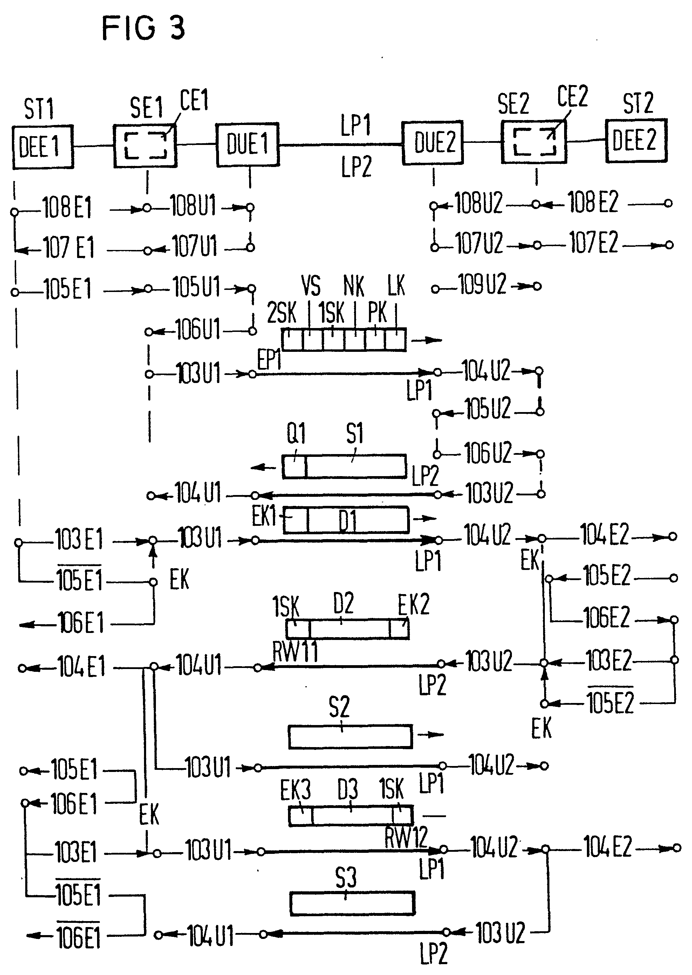

Fig. 3 zeigt schematisch ein derartiges Datenübertragungssystem, mit Hilfe dessen zwischen den beiden Schlüsseleinrichtungen SE1 und SE2 ein Vollduplexbetrieb möglich ist, wogegen die beiden Datenendeinrichtungen DEE1, DEE2 und die beiden Cryptoeinheiten CE1, CE2 im Halbduplexbetrieb betrieben werden.

Die Betriebsbereitschaft der Datenendeinrichtungen DEE1, DEE2, der Schlüsseleinrichtungen SE1, SE2 und der Übertragungseinrichtungen DUE1, DUE2 wird ähnlich erzielt, wie es bereits anhand der Fig. 1 beschrieben wurde. Insbesondere werden dazu im Bereich der ersten Station ST1, Signale über die Leitungen 108E1, 108U1, 107E1, 107U1 übertragen und im Bereich der zweiten Station ST2, werden entsprechende Signale über die Leitungen 108E2, 108U2, 107U2, 107E2 übertragen.

Ähnlich wie im Fall der Fig. 1 wird angenommen, daß die Datenendeinrichtung DEE1 Daten senden will. Dazu werden wieder über die Leitungen 105E1, 105U1, 106U1, Signale übertragen, aus denen die Schlüsseleinrichtung SE1 schließlich erkennt, daß die Datenübertragungseinrichtung DUE1 sendebereit ist. Nun wird von der Schlüsseleinrichtung SE1 über die Leitung 103U1 das Einphasprogramm EP1 abgegeben, das dem Einphasprogramm EP1 gemäß Fig. 1 gleicht. Auch die über die Leitungen 104U2, 105U2, 106U2 abgegebenen Signale entsprechen jenen Signalen, welche über die gleichen Leitungen gemäß Fig. 1 abgegeben wurden.

Über die Leitung 103U2 wird nun aber die Quittung Q1 über das zweite Leitungspaar LP2 abgegeben, wogegen die gleiche Quittung Q1 gemäß Fig. 1 über das erste Leitungspaar LP1 abgegeben wurde. Abgesehen von diesen unterschiedlichen Leitungspaaren sind aber die Prozeduren gemäß Fig. 1 und gemäß Fig. 3 identisch bis zum Ende der Quittung Q1. Danach wird gemäß Fig. 3 das Synchronisiersignal S1 gesendet. Beispielsweise können als Synchronisiersignal S1 abwechselnd jeweils zwei 1-Werte bzw. zwei O-Werte gesendet werden. Während der Dauer dieses Synchronisiersignals S1 werden über die Leitungen 103E1, 103U1, 104U2, 104E2, die Daten D1 und die Endekennung EK1 übertragen. Das Synchronisiersignal S1 dauert somit bis zum Ende der Endekennung EK1.

Nach Übertragung der Daten D1 und der Endekennung EK1, erkennt die empfangende Schlüsseleinrichtung SE2 die Endekennung EK1 und veranlaßt unabhängig vom Zustand der Leitung 105E2 sofort den Richtungswechsel. Das Richtungswechselprogramm RW11 besteht in diesen Fall nur aus der ersten Sendekennung 1SK, wogegen das Richtungswechselprogramm RW1 gemäß Fig. 1 aus der Phaskennung PK, aus der ersten Sendekennung 1SK und aus der zweiten Sendekennung 2SK bestand. Für das Richtungswechselprogramm RW1 wurden 120 Bit benötigt, für das Richtungswechselprogramm RW11 werden nur 40 Bit benötigt. Dieses Richtungswechselprogramm RW11 enthält keine Phaskennung, da der Taktsynchronismus in beiden Richtungen dauernd aufrechterhalten wird. Ein Neueinphasen der Übertragungsstrecke beim Richtungswechsel ist daher nicht nötig. Es genügt, die beiden Cryptoeinheiten CE1 und CE2 mit dem letzten Zeichen der Endekennung definiert anzuhalten und nach erfolgtem Richtungswechsel mit dem letzten Zeichen der ersten Sendekennung wieder neu zu starten.

Im Anschluß an das Richtungswechselprogramm RW11 werden die Daten D2 und die Endekennung EK2 über das Leitungspaar LP2 übertragen. Gleichzeitig wird über das Leitungspaar LP1 das Synchronisiersignal S2 übertragen. Die Schlüsseleinrichtung SE1 erkennt die Endekennung EK2 und veranlaßt danach die Aussendung eines weiteren Richtungswechselprogramms RW12. Das Synchronisiersignal S2 wird somit während der Übertragung des Richtungswechselprogramms RW11, der Daten D2 und der Endekennung EK2 übertragen.

Im Anschluß an das Richtungswechselprogramm RW12 werden die Daten D3 und die Endekennung EK3 über das Leitungspaar LP1 übertragen und gleichzeitig wird in der Gegenrichtung das Synchronisiersignal S3 über das Leitungspaar LP2 übertragen.

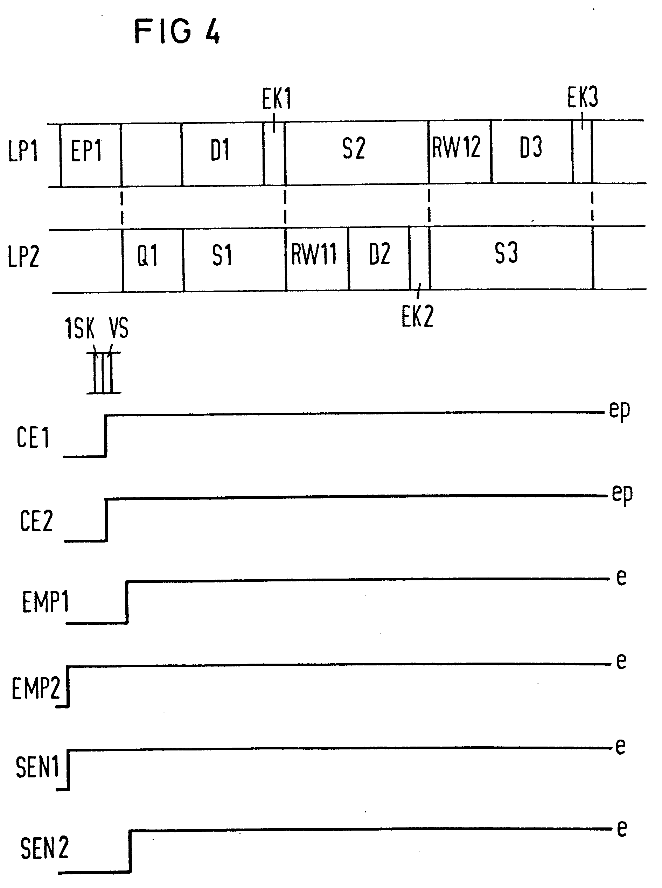

Fig. 4 zeigt deutlicher die zeitliche Aufeinanderfolge der einzelnen Daten und Signale. In einer Richtung werden über das Leitungspaar LP1 das Einphasprogramm EP1, die Daten D1, die Endekennung EK1, das Synchronisiersignal S2, das Richtungswechselprogramm RW12, die Daten D3 und die Endekennung EK3 übertragen. In der anderen Richtung werden über das Leitungspaar LP2 die Quittung Q1, das Synchronisiersignal S1, das Richtungswechselprogramm RW11, die Daten D2, die Endekennung EK2 und das Synchronisiersignal S3 übertragen.

Die beiden Darstellungen bezüglich der Cryptoeinheiten CE1 und CE2 zeigen, daß diese Cryptoeinheiten nach dem letzten Bit der ersten Sendekennung 1SK eingephast sind, und eingephast bleiben. Im Gegensatz dazu sind gemäß Fig. 2 wiederholte Einphasungen der Cryptoeinheiten CE1 und CE2 erforderlich.

In Fig. 4 sind auch die Betriebszustände der Empfangseinrichtungen EMP1, EMP2 der Datenübertragungseinrichtungen DUE1 bzw. DUE2 dargestellt. Danach wurde angenommen, daß die Empfangseinrichtung EMP2 bereits bei Beginn des Einphasprogramms EP1 eingeschaltet ist, wogegen die Empfangseinrichtung EMP1 erst am Ende des Einphasprogramms EP1 eingeschaltet wird.

Dagegen wird die Sendeeinrichtung SEN1 der Datenübertragungseinrichtung DUE1 bereits am Beginn des Einphasprogramms EP1 eingeschaltet, wogegen die Sendeeinrichtung SEN2 der Datenübertragungseinrichtung DUE2 erst am Ende des Einphasprogramms EP1 eingeschaltet wird.

Zusammenfassend läßt sich sagen, daß gemäß Fig. 3 Daten der Datenendeinrichtung DEE1 im Halbduplexbetrieb zur Datenendeinrichtung DEE2 und umgekehrt übertragen werden. Diesbezüglich läßt auch die Fig. 4 erkennen, daß entweder die Daten D1 und D3 von der Datenendeinrichtung DEE1 zur Datenendeinrichtung DEE2 in der einen Richtung oder die Daten D2 in der Gegenrichtung übertragen werden. Es erfolgt somit keine gleichzeitige Datenübertragung in beiden Richtungen.

Zur Einphasung der beiden Cryptoeinheiten wird von der einen Schlüsseleinrichtung SE1 aus das Einphasprogramm EP1 an die andere Schlüsseleinrichtung SE2 gesendet und diese Schlüsseleinrichtung SE2 quittiert den Empfang mit der Quittung Q1. Danach verkehren die beiden Schlüsseleinrichtungen SE1 und SE2 über die beiden Datenübertragungseinrichtungen DUE1 und DUE2 im Vollduplexbetrieb.

Nach Einphasung der beiden Cryptoeinheiten CE1, CE2 werden in einer Richtung jeweils ein Richtungswechselprogramm, Daten und eine Endekennung übertragen und in der Gegenrichtung wird gleichzeitig ein Synchronisiersignal übertragen. Beispielsweise werden in einer Richtung über das Leitungspaar LP2 das Richtungswechselprogramm RW11, die Daten D2 und die Endekennung EK2 übertragen und in der Gegenrichtung wird über das zweite Leitungspaar LP1 gleichzeitig das Synchronisiersignal S2 übertragen. Im Anschluß daran werden über das Leitungspaar LP1 das Richtungswechselprogramm RW12, die Daten D3 und die Endekennung EK3 übertragen und gleichzeitig wird über das Leitungspaar LP2 das Synchronisiersignal S3 übertragen.

Der Fig. 4 ist auch direkt zu entnehmen, daß die Richtungswechselprogramme RW11 und RW12 nicht quittiert werden. Im Gegensatz dazu ist aus Fig. 2 ersichtlich, daß das Richtungswechselprogramm RW1 mit der Quittung Q2 quittiert wird.

## Ansprüche

1. Verfahren zur verschlüsselten Datenübertragung im Halbduplexbetrieb zwischen Datenendeinrichtungen zweier Datenstationen (ST1, ST2), wobei eine Schlüsseleinrichtung (SE1) der einen Datenstation (ST1) ein Einphasprogramm (EP1) an die Schlüsseleinrichtung (SE2) der anderen Datenstation (ST2) sendet und diese andere Schlüsseleinrichtung (SE2) eine Quittung abgibt, gekennzeichnet durch die folgenden Verfahrensschritte :

A. Die Schlüsseleinrichtungen (SE1, SE2) der beiden Datenstationen (ST1, ST2) verkehren über die entsprechenden Datenübertragungseinrichtungen (DUE1, DUE2), die einen Vollduplexbetrieb ermöglichen.

B. Nach Einphasung der Cryptoeinheiten (CE1, CE2) beider Datenstationen (ST1, ST2) werden in einer Richtung Richtungswechselprogramme (RW11), Daten (D2) und Endekennungen (EK2) übertragen, und in der Gegenrichtung werden gleichzeitig Synchronisiersignale (S2) übertragen (Fig. 3 und 4).

2. Verfahren nach Anspruch 1, dadurch gekennzeichnet, daß unmittelbar nach Einphasung der Cryptoeinheiten (CE1, CE2) und nach Empfang der Quittung (Q1) in einer Richtung (LP1) Daten (D1) und eine Endekennung (EK1) und gleichzeitig in der Gegenrichtung (LP2) das Synchronisiersignal (S1) übertragen werden. (Fig. 4).

3. Verfahren nach Anspruch 1, dadurch gekennzeichnet, daß das Synchronisiersignal (S1, S2, S3) abwechselnd aus je zwei Binärwerten erster Art (1) bzw. aus je zwei Binärwerten zweiter Art (0) besteht.

4. Verfahren nach Anspruch 1, dadurch gekennzeichnet, daß die Richtungswechselprogramme (RW11, RW12) jeweils nur aus der ersten Sendekennung (1SK) bestehen.

## Claims

1. Method for coded data transmission in semi-duplex operation between data terminal devices of two data stations (ST1, ST2), where a code device (SE1) in the first data station (ST1) emits a phasing-in programme (EP1) to the code device (SE2) in the other data station (ST2) and this other code device (SE2) emits an acknowledgement, characterised by the following method steps :

A. the code devices (SE1, SE2) in the two data stations (ST1, ST2) communicate via the corresponding data transmission devices (DUE1, DUE2) which permit full-duplex operation

B. following the phasing-in of the crypto-units (CE1, CE2) of the two data stations (ST1, ST2), direction change programmes (RW11), data (D2), and end codes (EK2) are transmitted in one direction whereas synchronising signals (S2) are transmitted simultaneously in the opposite direction (Fig. 3 and 4).

2. Method as claimed in claim 1, characterised in that directly following the phasing-in of the crypto units (CE1, CE2) and following the reception of the acknowledgement (Q1), data (D1) and an end code (EK1) are transmitted in one direction (LP1) whereas the synchronising signal (S1) is transmitted simultaneously in the opposite direction (LP2) (Fig. 4).

3. Method as claimed in claim 1, characterised in that the synchronising signal (S1, S2, S3) consists alternately of two binary values of a first type (1) and two binary values of a second type (0).

4. Method as claimed in claim 1, characterised in that the direction change programmes (RW11, RW12) each consist only of the first transmission code (1SK).

## Revendications

1. Procédé de transmission chiffrée de données en communication semi-duplex entre des équipements terminaux de données de deux postes de traitement (ST1, ST2), du type dans lequel le dispositif de chiffrage (SE1) de l'un des postes de traitement (ST1) émet un programme de mise en phase (EP1) au dispositif de chiffrage (SE2) de l'autre poste de traitement, ledit autre dispositif de chiffrage (SE2) émettant un accusé de réception, caractérisé par les phases opératoires suivantes :

A. Les dispositifs de chiffrage (SE1, SE2) des deux postes de traitement (ST1, ST2) communiquent par l'intermédiaire des dispositifs de transmission de données correspondant (DUE1, DUE2) qui permettent une exploitation en duplex intégral.

B. Après la mise en phase des unités cryptographiques (CE1, CE2) des deux postes de traitement (ST1, ST2) on transmet, dans un sens, des programmes de changement de sens (RW11), des données (D2), des identifications terminales (EK2) et, dans le sens opposé, on transmet en même temps des signaux de synchronisation (S2) (figure 3 et 4).

2. Procédé selon la revendication 1, caractérisé par le fait qu'immédiatement après la mise en phase des unités cryptographiques (CE1, CE2) et après réception de l'accusé de réception (Q1), on émet, dans un sens (LP1), des données (D1) et une identification terminale (EK1) et, en même temps, en sens opposé (LP2), le signal de synchronisation (S1) (figure 4).

3. Procédé selon la revendication 1, caractérisé par le fait que le signal de synchronisation (S1, S2, S3) est alternativement constitué par respectivement deux valeurs binaires d'un premier genre (1) et respectivement par deux valeurs binaires d'un second genre (0).

4. Procédé selon la revendication 1, caractérisé par le fait que les programmes de changement de sens (RW11, RW12) sont respectivement constitués uniquement par la première identification d'émission (1SK).

# FIG 1

# FIG 2

# FIG 3

FIG 4